# EUROPÄISCHE PATENTSCHRIFT

(11) **EP 0 797 945 B1**
(45) Veröffentlichungstag und Bekanntmachung des Hinweises auf die Patenterteilung: **14.08.2002**
(21) Anmeldenummer: 97810107.9
(22) Anmeldetag: 27.02.1997
(51) Int. Cl.: A47J 31/46, A47J 31/54

(54) **Filterkaffeemaschine**
Filter-coffee machine
Machine à café filtre

(30) Priorität: 25.03.1996 CH 76796
(43) Veröffentlichungstag der Anmeldung: 01.10.1997
(73) Patentinhaber: FIANARA INTERNATIONAL B.V., 1079 LH Amsterdam (NL)
(72) Erfinder: SCHMED, Arthur, 8635 Oberdürnten (CH)
(74) Vertreter: Rottmann, Maximilian R.

(56) Entgegenhaltungen:
- EP-A- 0 217 211
- DE-A- 3 521 989
- US-A- 5 357 848

## Beschreibung

Die Erfindung betrifft eine Filterkaffeemaschine nach dem Oberbegriff des Anspruchs 1.

Grundsätzlich lassen sich zwei Gattungen von Kaffeemaschinen unterscheiden. Bei der ersten Gattung wird das Brühwasser von einer Pumpe unter Druck gesetzt und durch das Kaffeepulver gefördert. Bei der zweiten Gattung fliesst das Brühwasser unter der Wirkung der Schwerkraft drucklos durch das in einem Filter aufgenommene Kaffeepulver. Zum Erhitzen und Fördern des Wassers weist die zweite Gattung von Kaffeemaschinen im allgemeinen nur ein Heizelement auf. Eine Pumpe wird nicht benötigt, da sich das Wasser beim Erhitzen nach den thermodynamischen Grundsätzen ausdehnt und über eine Steigleitung zu einem Auslass strömt, von wo es anschliessend das Kaffeepulver drucklos durchfliessen kann. Diese zweiten Gattung von Kaffeemaschinen ist unter dem Begriff Filterkaffeemaschinen bekannt. Bei der hier zur Rede stehenden, erfindungsgemässen Anordnung wird immer von der zweiten Gattung, also von Filterkaffeemaschinen ausgegangen.

Eine Filterkaffeemaschinen mit einem Dampfauslass ist aus US-A-5 357 848 bekannt.

Ein weiteres Problem bei der Erzeugung von Dampf aus Wasser besteht darin, dass der Benutzer einen möglichst trockenen Dampf und kein Gemisch aus Dampf und siedendem Wasser wünscht.

Es ist somit die Aufgabe der Erfindung, eine Filterkaffeemaschine gemäss dem Oberbegriff des Anspruchs 1 zu schaffen, mittels welcher trockener Dampf erzeugt werden kann, wobei die Filterkaffeemaschine einfach im Aufbau und kostengünstig herzustellen sein soll.

Diese Aufgabe wird durch die im Kennzeichen des Anspruchs 1 aufgeführten Merkmale gelöst.

Bevorzugte Ausführungsformen der Erfindung sind in den abhängigen Ansprüchen 2 bis 15 umschrieben.

So sieht eine bevorzugte Ausführungsform der Anordnung zur Erzeugung von Dampf einen Wasservorratsbehälter vor, der innerhalb des unter Überdruck stehenden Wasser- bzw. Wasser-Dampf-Kreislaufes angeordnet ist. Der Wasservorratsbehälter weist einen Auslass auf, der mit dem Einlass des Heizelements verbunden ist. Die Mittel zur Begrenzung der dem Heizelement pro Zeiteinheit zufliessenden Wassermenge sind dabei im oder nach dem Auslass angeordnet. Durch diese Merkmale wird erreicht, dass der Dampf kontinuierlich und nicht stossweise erzeugt wird.

Schliesslich wird in einer bevorzugten Ausführungsform der Erfindung vorgeschlagen, den Wasservorratsbehälter und die Trennvorrichtung zu einer Einheit zusammenzufassen. Um das in der Trennvorrichtung abgeschiedene Wasser wiederum dem Wasser-Dampf-Kreislauf zuzuführen, steht der Wasservorratsbehälter mit der Trennvorrichtung in Verbindung. Dadurch wird der Wasserverbrauch bei der Erzeugung von Dampf minimiert.

Nachfolgend soll ein Ausführungsbeispiel der Erfindung anhand von Zeichnungen näher erläutert werden. In diesen Zeichnungen zeigt:
- Fig.1: den prinzipiellen Aufbau einer Filterkaffeemaschine mit einer Anordnung zur Erzeugung von Dampf in einem ersten Betriebszustand;
- Fig.2: die Filterkaffeemaschine gemäss Fig. 1 in einem zweiten Betriebszustand;
- Fig.2a: eine Ausführungsvariante der in Fig. 2 dargestellten Filterkaffeemaschine;
- Fig.3: eine Vorrichtung zur Trennung von Wasser und Dampf in einem Längsschnitt;
- Fig.3a: die Vorrichtung gemäss Fig. 3 in einem Querschnitt;
- Fig.4: die Vorrichtung gemäss Fig. 3 mit ausgelenkter Membran, und
- Fig.4a: die Vorrichtung gemäss Fig. 4 in einem Querschnitt.

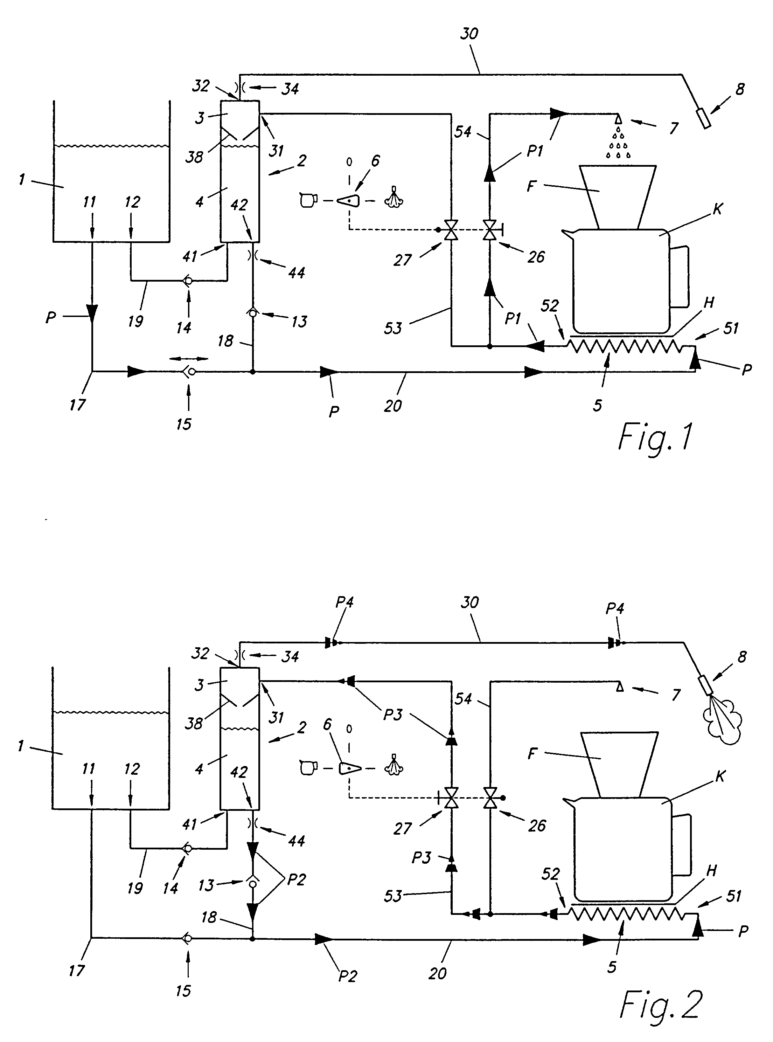

Anhand der Fig. 1 soll der prinzipielle Aufbau einer Filterkaffeemaschine zusammen mit einer Anordnung zur Erzeugung von Dampf in einem ersten Betriebszustand -beim Erzeugen von Brühwasser und Aufbrühen von Kaffeepulver- erläutert werden. Die Filterkaffeemaschine weist im wesentlichen einen Frischwassertank 1, ein als Durchlauferhitzer ausgebildetes Heizelement 5, einen Wählschalter 6, einen Heisswasserauslass 7 sowie eine Dampfdüse 8 auf. Zur Aufnahme des aufzubrühenden Kaffeepulvers ist zudem ein Filtertrichter F vorgesehen, währenddem das fertige Kaffeegetränk in einen mit K bezeichneten Kaffeekrug einfliesst. Über dem Heizelement 5 ist in bekannter Weise eine Heizplatte H angeordnet. Die Anordnung zur Erzeugung von Dampf weist im wesentlichen eine aus Trennvorrichtung 3 sowie Wasservorratsbehälter 4 bestehende Einheit 2, mehrere Leitungen 18, 19, 20, 30, 53, Ventile 13, 14 sowie Verengungen 34, 44 auf, wobei das Heizelement 5 bei der Erzeugung von Dampf ebenfalls als Teil der Anordnung zu betrachten ist.

Der Frischwassertank 1 ist über eine Frischwasserleitung 17 und eine nachfolgende Leitung 20 mit dem Heizelement 5 verbunden, wobei in der Frischwasserleitung 17 ein Sperrventil 15 angeordnet ist. Vom Ausgang 52 des Heizelements 5 führt eine Heisswasserleitung 54 zum Heisswasserauslass 7 sowie eine weitere Leitung 53 zu einem ersten Einlass 31 der Trennvorrichtung 3. Der Auslass 32 der Trennvorrichtung 3 mündet über eine Dampfleitung 30 in einer Dampfdüse 8. Der untere Teil der Einheit 2 umfasst einen Wasservorratsbehälter 4, der über eine Leitung 19 mit dem Frischwassertank 1 verbunden ist. Der Auslass 42 des Wasservorratsbehälters 4 ist über die Leitungen 18 und 20 mit dem Eingang 51 des Heizelements 5 verbunden. Dabei ist sowohl vor dem Einlass 41 wie auch hinter dem Auslass 42 des Wasservorratsbehälters 4 je ein Sperrventil 14, 13 angeordnet. Das erste Sperrventil 14 verhindert ein Zurückfliessen von Wasser vom Wasservorratsbehälter 4 zum Frischwassertank 1, währenddem das zweite Sperrventil 13 ein Zurückfliessen von Wasser vom Heizelement 5 zum Wasservorratsbehälter 4 verhindert.

Sowohl im Bereich des Auslasses 32 der Trennvorrichtung 3 wie auch im Bereich des Auslasses 42 des Wasservorratsbehälters 4 ist je eine Verengung 34, 44 angeordnet, deren Funktionen anschliessend noch näher erläutert werden. Zudem ist in der Heisswasserleitung 54 und in der zum Einlass 32 der Trennvorrichtung 3 führenden Leitung 53 je ein Absperrorgan 26, 27 vorgesehen. Beide Absperrorgane 26, 27 können über den Wählschalter 6 alternierend betätigt werden.

Das Heizelement 5 wird in bekannter Weise automatisch durch den Wählschalter 6 aktiviert, sobald dieser aus der Stellung 0 in eine der horizontalen Stellungen verdreht wird. Es versteht sich, dass das Heizelement 5 in der 0-Stellung des Wählschalters 6 nicht aktiv ist.

Beim in der Fig. 1 dargestellten Betriebszustand fliesst Frischwasser, dargestellt durch die Pfeile P, vom Frischwassertank 1 zum Heizelement 5, wo es erhitzt wird. Das erhitzte Wasser, dargestellt durch die Pfeile P1, strömt danach über die Heisswasserleitung 54 und das geöffnete Absperrorgan 26 zum Heisswasserauslass 7, von wo es in den Filtertrichter F gelangt, das darin aufgenommene Kaffeepulver aufbrüht und schliesslich als Kaffeegetränk in den Krug K fliesst. Eine Pumpe zum Fördern des Wassers wird bei einer derartigen Kaffeemaschine nicht benötigt, da sich das Wasser beim Erhitzen nach den thermodynamischen Grundsätzen ausdehnt und stossweise -Ventil 15 alternierend offen und geschlossen- über die Heisswasserleitung 54 zum Auslass 7 strömt, von wo es, der Schwerkraft gehorchend, anschliessend das Kaffeepulver drucklos durchfliessen kann. Da die Funktionsweise derartiger Kaffeemaschinen bekannt ist, erübrigt es sich, an dieser Stelle näher darauf einzugehen.

Da das in der vom Heizelement 5 zur Trennvorrichtung 3 führenden Leitung 53 angeordnete Absperrorgan 27 beim Erzeugen von Brühwasser geschlossen ist, ist die Trennvorrichtung 3 bei der vorgängig geschilderten Erzeugung von Heisswasser nicht aktiv.

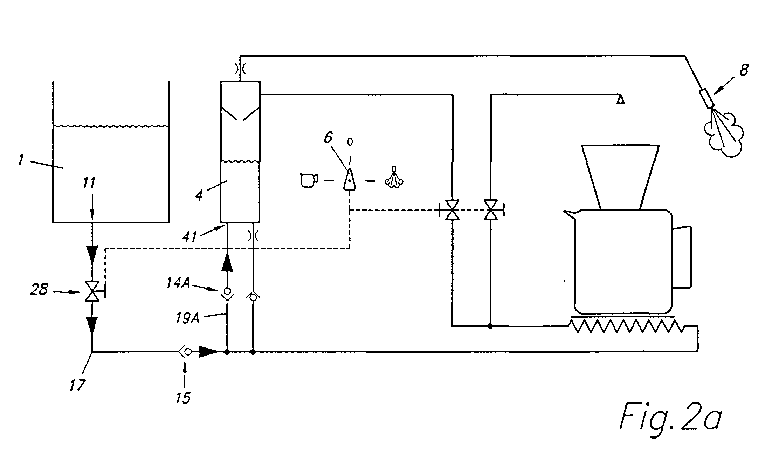

Fig. 2 zeigt die Filterkaffeemaschine gemäss Fig. 1 in einem zweiten Betriebszustand, bei dem Dampf erzeugt wird. Dazu wird der Wählschalter 6 von der linken in die rechte Stellung gedreht, wodurch das in der Brühwasserleitung 54 angeordnete Absperrorgan 26 geschlossen und das andere Absperrorgan 27 geöffnet wird. Das im Heizelement 5 erhitzte Wasser bzw. Wasser-Dampf-Gemisch strömt über die Leitung 53 in die Trennvorrichtung 3, wo der Dampf abgeschieden wird. Der in der Trennvorrichtung 3 abgeschiedene Dampf wird über den Auslass 32 und die Dampfleitung 30 der Dampfdüse 8 zugeführt, währenddem das in der Trennvorrichtung 3 abgeschiedene Wasser über ein Sieb 38, der Schwerkraft folgend, nach unten in den Wasservorratsbehälter 4 tropft. Durch die an den beiden Auslässen 32, 42 der Einheit 2 angebrachten Verengungen 34, 44 wird in der Einheit 2 während der Dampferzeugung ein Überdruck aufrechterhalten. Durch diesen Überdruck bleibt das in der Zuleitung 19 angeordnete Sperrventil 14 geschlossen, währenddem durch den generellen Systemdruck das in der Frischwasserzuleitung 17 angeordnete Sperrventil 15 ebenfalls geschlossen bleibt. Das nach dem Auslass 42 des Wasservorratsbehälters 4 angeordnete Sperrventil 13 ist dagegen geöffnet. Über den Auslass 42 des Wasservorratsbehälters 4 wird dem Heizelement 5 kontinuierlich Wasser zugeführt, wobei die Verengung 44 am Ausgang dieses Auslasses 44 die Wasserzufuhr derart begrenzt, dass dem Heizelement 5 pro Zeiteinheit eine definierte Wassermenge zugeführt wird. Die Wasserzufuhr zum Heizelement 5 ist dabei so bemessen, dass durch letzteres praktisch sämtliches, zugeführtes Wasser verdampft wird.

Die Verengung 34 im Bereich des Auslasses 32 der Trennvorrichtung 3 wird vorzugsweise durch eine mit einer Öffnung versehene, flexible Membran gebildet, welche durch einen in der Trennvorrichtung 3 herrschenden Überdruck ausgelenkt bzw. durchgebogen wird. Mit dem Durchbiegen der Membran vergrössert sich deren Öffnung automatisch. Durch diese Membran wird ein einfacher Regelkreis geschaffen, der für die Aufrechterhaltung eines bestimmten Überdrucks verantwortlich ist. Die Membran ist dabei vorzugsweise als Sicherheitselement ausgebildet, welches bei Überschreiten eines vorbestimmten Grenzdrucks zerstört wird. Auf diese Weise wird sichergestellt, dass auch bei einem Verstopfen der Membranöffnung, beispielsweise durch Kalk, kein gefährlicher Überdruck in der Trennvorrichtung 3 aufgebaut werden kann.

Durch eine derartige Anordnung, bei der der Wasservorratsbehälter 4 innerhalb des unter Überdruck stehenden Wasser-. bzw. Wasser-Dampf-Kreislaufes angeordnet ist, wird erreicht, dass dem Heizelement 5 kontinuierlich Wasser zudosiert wird, so dass letztlich auch der Dampf kontinuierlich -und nicht stossweiseerzeugt wird.

Nachdem die Leitung 53 über das Absperrorgan 27 wieder verschlossen worden ist, wird der Überdruck in der Einheit 2 abgebaut und diese, nach dem Prinzip der kommunizierenden Röhren, vom Frischwassertank 1 über die Leitung 19 anschliessend wieder mit Frischwasser gefüllt.

Fig. 2a zeigt eine Ausführungsvariante der in Fig. 2 dargestellten Filterkaffeemaschine. Dabei ist der Wasservorratsbehälter 4 über eine Leitung 19a indirekt mit dem Frischwassertank 1 verbunden. In der Leitung 19a ist wiederum ein Sperrventil 14a angeordnet. Zudem ist in der Frischwasserleitung 17 ein weiteres Sperrventil 28 angeordnet, welches über den Wählschalter 6 betätigt wird. Beim hier dargestellten Betriebszustand wird der Wasservorratsbehälter 4 vom Frischwassertank 1 -nachdem Dampf erzeugt worden ist- wieder mit frischem Wasser aufgefüllt. Im Gegensatz zum vorgängigen Ausführungsbeispiel ist die Frischwasserleitung 17 beim Erzeugen von Dampf über das Sperrventil 28 verschlossen.

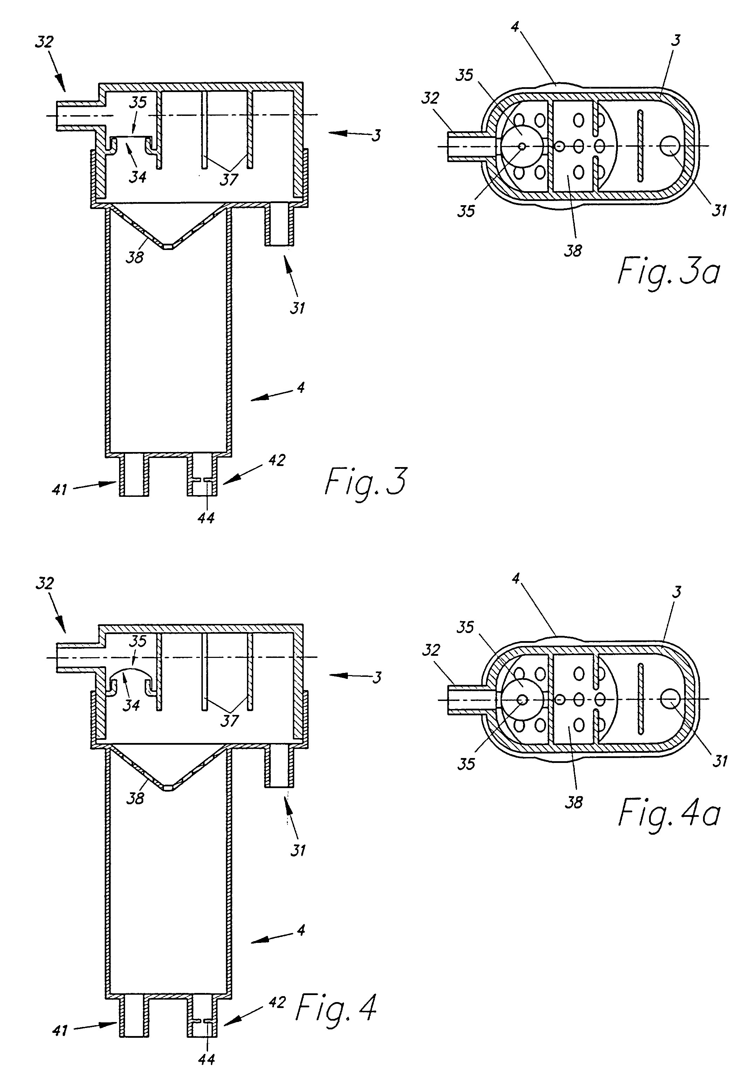

Fig. 3 zeigt ein Ausführungsbeispiel der Einheit 2 in einem Längs- und Fig.3a in einem Querschnitt. Die Einheit 2 besteht aus einem ovalen Oberteil 3, das als Trennvorrichtung ausgebildet ist und einem hohlzylindrisch ausgebildeten Basisteil 4, der als Wasservorratsbehälter dient. Hinter dem Einlass 31 der Trennvorrichtung 3 sind mehrere Schikanen 37 angeordnet, welche zur Trennung des Dampfes des vom Heizelement erhitzen Wasser-Dampf-Gemisches ausgebildet sind. Das im Basisteil angeordnete, trichterförmige Sieb ist mit dem Bezugszeichen 38 versehen. Vor dem Auslass 32 der Trennvorrichtung 3 ist die mit einer zentralen Öffnung 35 versehene Membran 34 angeordnet. Die am Auslass 42 des Wasservorratsbehälters 4 vorgesehene Verengung 44 ist in Form einer Lochscheibe ausgebildet.

Fig.4 zeigt schliesslich die Einheit gemäss Fig. 3 mit ausgelenkter Membran 34 in einem Längs- und Fig.4a in einem Querschnitt. Aus diesen beiden Figuren ist ersichtlich, dass sich die zentrale Öffnung 35 der Membran 34 mit deren Auslenkung vergrössert.

Durch die erfindungsgemässe Anordnung kann bei Filterkaffeemaschinen auf einfache Art und Weise jederzeit Dampf erzeugt werden, und zwar insbesondere ohne dass eine Pumpe oder ein anderes, fremdbetätigtes Dosiermittel vorhanden sein muss. Derartige Filterkaffeemaschinen eignen sich beispielsweise hervorragend zur Herstellung von Cappuccino. Dazu kann zudem ein Milchbehälter, nicht eingezeichnet, vorgesehen werden, dem in bekannter Weise mittels einer durch einen solchen Milchbehälter geführten und mit einer Öffnung versehenen Dampfleitung Milch entnommen -Venturi-Effekt- und aufgeschäumt werden kann.

Bei einer derartigen Kaffeemaschine werden zudem die ursprünglichen Eigenschaften vollumfänglich beibehalten.

Anzufügen ist, dass das vorgängig umschriebene Ausführungsbeispiel keinesfalls als abschliessend zu betrachten ist. So ist es im Rahmen der Erfindung beispielsweise denkbar, anstelle des gezeigten, einen Heizelements deren zwei vorzusehen. Dies hätte den Vorteil, dass bei Bedarf gleichzeitig Brühwasser und Dampf erzeugt werden könnte.

Denkbar ist auch, dass der Auslass des Wasservorratsbehälters in einen separaten Behälter geführt wird, so dass das zu erhitzende Wasser auch im Falle der Dampferzeugung vom Frischwassertank zugeführt würde. In diesem Falle bräuchte der Wasservorratsbehälter auch nicht mit einem Frischwasseranschluss versehen zu werden.

Schliesslich wäre es auch denkbar, das Heizelement beim Erzeugen von Dampf mit einer unterschiedlichen, vorzugsweise höheren Leistung als beim Erzeugen von Brühwasser zu betreiben.

Eine weitere Variante könnte darin bestehen, die Einheit im Frischwassertank zu integrieren.

## Patentansprüche

1. Filterkaffeemaschine mit einem Frischwassertank (1) sowie zumindest einem als Durchlauferthitzer ausgebildeten Heizelement (5) zum Erhitzen von Wasser, wobei eine Anordnung zur Erzeugung von Dampf vorgesehen ist, **dadurch gekennzeichnet, daß** die Anordnung mit einer Trennvorrichtung (3) zur Trennung von Wasser und Dampf und mit Mitteln (44) zur Begrenzung der dem Heizelement (5) pro Zeiteinheit zufliessenden Wassermenge versehen ist, wobei die Trennvorrichtung (3) einen mit dem Ausgang (52) des Heizelements (5) verbundenen ersten Einlass (31) und einen mit einer Dampfdüse (8) verbundenen ersten Auslass (32) aufweist.

2. Filterkaffeemaschine nach Anspruch 1, **dadurch gekennzeichnet, dass** die Anordnung zur Erzeugung von Dampf einen Wasservorratsbehälter (4) aufweist, der innerhalb des unter Überdruck stehenden Wasser- bzw. Wasser-Dampf-Kreislaufes angeordnet ist, und dass der Wasservorratsbehälter (4) einen Auslass (42) aufweist, der mit dem Einlass (51) des Heizelements (5) verbunden ist, wobei die Mittel zur Begrenzung der dem Heizelement (5) pro Zeiteinheit zufliessenden Wassermenge im oder nach dem Auslass (42) angeordnet sind.

3. Filterkaffeemaschine nach Anspruch 2, **dadurch gekennzeichnet, dass** ein Sperrventil (13) vorgesehen ist, welches ein Zurückfliessen von Wasser vom Heizelement (5) zum Wasservorratsbehälter (4) zu verhindern bestimmt ist.

4. Filterkaffeemaschine nach Anspruch 2 oder 3, **dadurch gekennzeichnet, dass** als Mittel zur Begrenzung der dem Heizelement (5) pro Zeiteinheit zufliessenden Wassermenge eine Querschnittsverengung (44) im Auslass (42) des Wasservorratsbehälters (4) oder in der zum Heizelement (5) führenden Leitung (18) vorgesehen ist.

5. Filterkaffeemaschine nach einem der Ansprüche 2 bis 4, **dadurch gekennzeichnet, dass** der Wasservorratsbehälter (4) und die Trennvorrichtung (3) zu einer Einheit (2) zusammengefasst sind, und dass der Wasservorratsbehälter (4) zur Aufnahme des in der Trennvorrichtung (3) abgeschiedenen Wassers mit letzterer in Verbindung steht.

6. Filterkaffeemaschine nach einem der Ansprüche 2 bis 5, **dadurch gekennzeichnet, dass** der Wasservorratsbehälter (4) bzw. die Einheit (2) einen zweiten Auslass (41) aufweist, der mit dem Frischwassertank (1) verbunden ist, und dass ein zweites Sperrventil (14, 14a) vorgesehen ist, welches ein Zurückfliessen von Wasser vom Wasservorratsbehälter (4) zum Frischwassertank (1) zu verhindern bestimmt ist.

7. Filterkaffeemaschine nach einem der vorhergehenden Ansprüche, **dadurch gekennzeichnet, dass** der Eingang (51) des Heizelements (5) zusätzlich über eine Frischwasserleitung (17) mit dem Frischwassertank (1) verbunden ist, wobei in der Frischwasserleitung (17) ein drittes Sperrventil (15) vorgesehen ist, welches ein Zurückfliessen von Wasser vom Heizelement (5) zum Frischwassertank (1) zu verhindern bestimmt ist.

8. Filterkaffeemaschine nach einem der Ansprüche 1 bis 7, **dadurch gekennzeichnet, dass** die Trennvorrichtung (3) bzw. die Einheit (2) mehrere Schikanen (37) aufweist, welche hinter deren erstem Einlass (31) angeordnet und zur Abtrennung des Dampfes aus dem vom Heizelement (5) erhitzten Wasser-Dampf-Gemisch ausgebildet sind.

9. Filterkaffeemaschine nach einem der vorhergehenden Ansprüche, **dadurch gekennzeichnet, dass** im Bereich des ersten Auslasses (32) der Trennvorrichtung (3) bzw. der Einheit (2) eine mit einer Öffnung (35) versehene Membran (34) vorgesehen ist.

10. Filterkaffeemaschine nach Anspruch 9, **dadurch gekennzeichnet, dass** die Membran (34) flexibel ausgebildet ist, so dass sie durch einen in der Trennvorrichtung (3) bzw. Einheit (2) herrschenden Überdruck ausgelenkt wird und sich die Öffnung (35) vergrössert.

11. Filterkaffeemaschine nach einem der vorhergehenden Ansprüche, **dadurch gekennzeichnet, dass** der Ausgang (52) des Heizelements (5) über eine Heisswasserleitung (54) zusätzlich mit einem Heisswasserauslass (7) verbunden ist.

12. Filterkaffeemaschine nach Anspruch 11, **dadurch gekennzeichnet, dass** der Ausgang (52) des Heizelements (5) über eine weitere Leitung (53) mit dem Einlass (31) der Trennvorrichtung (3) bzw. der Einheit (2) verbunden ist, wobei ein bzw. zwei Absperrorgan(e) (26, 27) vorgesehen ist/sind, mittels welchem bzw. welchen sich alternierend die Heisswasserleitung (54) oder die weitere Leitung (53) verschliessen lässt/lassen.

13. Filterkaffeemaschine nach einem der vorhergehenden Ansprüche, **dadurch gekennzeichnet, dass** Mittel vorgesehen sind, welche gleichzeitig mit dem Verschliessen der Heisswasserleitung (54) oder der weiteren Leitung (53) das Heizorgan (5) aktivieren.

14. Filterkaffeemaschine nach einem der vorhergehenden Ansprüche, **dadurch gekennzeichnet, dass** zwei Heizelemente vorgesehen sind, wobei der Ausgang des einen Heizelements mit der Trennvorrichtung (3) bzw. der Einheit (2) und der Ausgang des weiteren Heizelements mit dem Heisswasserauslass (7) verbunden ist.

15. Filterkaffeemaschine nach einem der Ansprüche 7 bis 14, **dadurch gekennzeichnet, dass** in der vom Frischwassertank (1) zum Eingang (51) des Heizelements (5) führenden Frischwasserleitung (17) ein weiteres Absperrorgan (28) angeordnet ist, welches beim Erzeugen von Dampf geschlossen ist.

## Claims

1. Filter-coffee machine with a clean-water tank (1) and at least one heating element (5) which is designed as a flow heater and is intended for heating water, an arrangement for generating steam being provided, **characterized in that** the arrangement is provided with a separating device (3) for separating water and steam and with means (44) for limiting the quantity of water flowing to the heating element (5) per unit of time, the separating device (3) having a first inlet (31), which is connected to the outlet (52) of the heating element (5), and a first outlet (32), which is connected to a steam nozzle (8).

2. Filter-coffee machine according to Claim 1, **characterized in that** the arrangement for generating steam has a water-supply tank (4) which is arranged within the water or water/steam circuit, which is subjected to positive pressure, and **in that** the water-supply tank (4) has an outlet (42) which is connected to the inlet (51) of the heating element (5), the means for limiting the quantity of water flowing to the heating element (5) per unit of time being arranged in, or downstream of, the outlet (42).

3. Filter-coffee machine according to Claim 2, **characterized in that** there is provided a check valve (13) which is intended for preventing water from flowing back from the heating element (5) to the water-supply tank (4).

4. Filter-coffee machine according to Claim 2 or 3, **characterized in that** the means provided for limiting the quantity of water flowing to the heating element (5) per unit of time is a cross-sectional narrowing (44) in the outlet (42) of the water-supply tank (4) or in the line (18) leading to the heating element (5).

5. Filter-coffee machine according to one of Claims 2 to 4, **characterized in that** the water-supply tank (4) and the separating device (3) are combined to form a unit (2), and **in that** the water-supply tank (4) is connected to the separating device (3) in order to accommodate the water separated off in said separating device.

6. Filter-coffee machine according to one of Claims 2 to 5, **characterized in that** the water-supply tank (4) or the unit (2) has a second outlet (41), which is connected to the clean-water tank (1), and **in that** there is provided a second check valve (14, 14a), which is intended for preventing water from flowing back from the water-supply tank (4) to the clean-water tank (1).

7. Filter-coffee machine according to one of the preceding claims, **characterized in that** the inlet (51) of the heating element (5) is additionally connected to the clean-water tank (1) via a clean-water line (17), a third check valve (15) being provided in the clean-water line (17), said third check valve being intended for preventing water from flowing back from the heating element (5) to the clean-water tank (1).

8. Filter-coffee machine according to one of Claims 1 to 7, **characterized in that** the separating device (3) or the unit (2) has a plurality of baffle plates (37), which are arranged downstream of the first inlet (31) of the above and are designed for separating off the steam from the water/steam mixture heated by the heating element (5).

9. Filter-coffee machine according to one of the preceding claims, **characterized in that** a diaphragm (34) provided with an opening (35) is provided in the region of the first outlet (32) of the separating device (3) or of the unit (2).

10. Filter-coffee machine according to Claim 9, **characterized in that** the diaphragm (34) is of flexible design, with the result that it is deflected by a positive pressure prevailing in the separating device (3) or unit (2), and the opening (35) increases in size.

11. Filter-coffee machine according to one of the preceding claims, **characterized in that** the outlet (52) of the heating element (5) is additionally connected to a hot-water outlet (7) via a hot-water line (54).

12. Filter-coffee machine according to Claim 11, **characterized in that** the outlet (52) of the heating element (5) is connected to the inlet (31) of the separating device (3) or of the unit (2) via a further line (53), there being provided one or two shut-off elements (26, 27), by means of which the hot-water line (54) or the further line (53) can be closed in alternating fashion.

13. Filter-coffee machine according to one of the preceding claims, **characterized in that** there are provided means which activate the heating element (5) at the same time as the hot-water line (54) or the further line (53) is closed.

14. Filter-coffee machine according to one of the preceding claims, **characterized in that** two heating elements are provided, the outlet of one heating element being connected to the separating device (3) or the unit (2) and the outlet of the further heating element being connected to the hot-water outlet (7).

15. Filter-coffee machine according to one of Claims 7 to 14, **characterized in that** arranged in the clean-water line (17) leading from the clean-water tank (1) to the inlet (51) of the heating element (5) is a further shut-off element (28), which is closed when steam is generated.

## Revendications

1. Machine à café à filtre comprenant un réservoir de stockage d'eau fraîche (1) et au moins un élément chauffant (5) réalisée sous forme d'un organe de chauffage continu et servant à chauffer de l'eau, tandis qu'un agencement est prévu pour la production de vapeur, **caractérisé en ce que** l'agencement est pourvu d'un dispositif de séparation (3), servant à séparer l'eau et la vapeur d'eau, et de moyens (44) servant à limiter la quantité d'eau passant vers l'élément chauffant (5) par unité de temps, le dispositif de séparation (3) comportant une première entrée (31) reliée à la sortie (52) de l'élément chauffant (5) et une première sortie (32) reliée à un éjecteur de vapeur (8).

2. Machine à café a filtre suivant la revendication 1, **caractérisée en ce que** l'agencement servant à produire de la vapeur d'eau comprend un réservoir de stockage d'eau (4) qui est disposé dans un circuit d'eau et de vapeur d'eau placé sous une surpression et **en ce que** le réservoir de stockage d'eau (4) comportent une sortie (42) qui est reliée à l'entrée (51) de l'élément chauffant (5), les moyens servant à limiter la quantité d'eau passant vers l'élément chauffant (5) par unité de temps étant disposés dans la sortie (42) ou en aval de celle-ci.

3. Machine à café à filtre suivant la revendication 2, **caractérisée en ce qu'**il est prévu un clapet antiretour (13) qui est destiné à empêcher un reflux d'eau de l'élément chauffant (5) vers le réservoir de stockage d'eau (4).

4. Machine à café à filtre suivant la revendication 2 ou 3, **caractérisée en ce qu'**en tant que moyens servant à limiter la quantité d'eau passant vers l'élément chauffant (5) par unité de temps, il est prévu un étranglement de section transversale (44) situé dans la sortie (42) du réservoir de stockage d'eau (4) ou dans la ligne (18) menant à l'élément chauffant (5).

5. Machine à café à filtre suivant l'une des revendications 2 à 4, **caractérisée en ce que** le réservoir de stockage d'eau (4) et le dispositif de séparation (3) sont réunis pour former une unité (2) et **en ce que**, pour recevoir l'eau séparée dans le dispositif de séparation (3), le réservoir de stockage d'eau (4) communique avec ce dernier.

6. Machine à café à filtre suivant l'une des revendications 2 à 5, **caractérisée en ce que** le réservoir de stockage d'eau (4) ou l'unité (2) comporte une seconde sortie (41) qui est reliée au réservoir d'eau fraîche (1) et **en ce qu'**il est prévu un second clapet antiretour (14, 14a) qui est destiné à empêcher un reflux d'eau du réservoir de stockage d'eau (4) vers le réservoir d'eau fraîche. (1).

7. Machine à café à filtre suivant l'une des revendications précédentes, **caractérisée en ce que** l'entrée (51) de l'élément chauffant (5) est reliée en outre au réservoir d'eau fraîche (1) par l'intermédiaire d'une ligne d'eau fraîche (17), tandis que, dans la ligne d'eau fraîche (17), il est prévu un troisième clapet antiretour (15) qui est destiné à empêcher un reflux d'eau de l'élément chauffant (5) vers le réservoir de stockage d'eau fraîche (1).

8. Machine à café à filtre suivant l'une des revendications 1 à 7, **caractérisée en ce que** le dispositif de séparation (3) ou l'unité (2) comporte plusieurs chicanes (37) qui sont disposées derrière la première entrée (31) de ce dispositif ou unité et sont réalisées pour séparer la vapeur d'eau à partir du mélange eau-vapeur d'eau chauffé par l'élément chauffant (5).

9. Machine à café a filtre suivant l'une des revendications précédentes, **caractérisée en ce que**, dans la zone de la première sortie (32) du dispositif de séparation (3) ou de l'unité (2), il est prévu une membrane (34) pourvue d'une ouverture (35).

10. Machine à café à filtre suivant la revendication 9, **caractérisée en ce que** la membrane (34) est flexible, de sorte qu'elle est écartée de sa position sous l'effet d'une surpression régnant dans le dispositif de séparation (3) ou l'unité (2) et que l'ouverture (35) s'agrandit.

11. Machine à café à filtre suivant l'une des revendications précédentes, **caractérisée en ce que** la sortie (52) de l'élément chauffant (5) est reliée en outre à une sortie d'eau chaude (7) par l'intermédiaire d'une ligne d'eau chaude (54).

12. Machine à café à filtre suivant la revendication 11, **caractérisée en ce que** la sortie (52) de l'élément chauffant (5) est reliée à l'entrée (31) du dispositif de séparation (3) ou de l'unité (2) par l'intermédiaire d'une autre ligne (53), tandis qu'il est prévu deux organes d'arrêt (26, 27) au moyen duquel ou desquels la ligne d'eau chaude (54) ou l'autre ligne (53) peut/peuvent se fermer d'une manière alternée.

13. Machine à café à filtre suivant l'une des revendications précédentes, **caractérisée en ce qu'**il est prévu des moyens qui activent l'organe chauffant (5) en même temps que la fermeture de la ligne d'eau chaude (54) ou de l'autre ligne (53).

14. Machine à café a filtre suivant l'une des revendications précédentes, **caractérisée en ce qu'**il est prévu deux éléments chauffants, la sortie d'un premier élément chauffant étant reliée au dispositif de séparation (3) ou à l'unité (2) et la sortie du second élément chauffant à la sortie d'eau chaude (7).

15. Machine à café à filtre suivant l'une des revendications 7 à 14, **caractérisée en ce que**, dans la ligne d'eau fraîche (17) menant du réservoir d'eau fraîche (1) à l'entrée (51) de l'élément chauffant (5), il est disposé un autre organe d'arrêt (28) qui est fermé lors de la production de vapeur.
